# EUROPEAN PATENT SPECIFICATION

(11) **EP 1 996 036 B1**
(45) Date of publication and mention of the grant of the patent: **18.07.2012**
(21) Application number: 07715896.2
(22) Date of filing: 23.02.2007
(51) Int. Cl.: A23L 3/46, A23C 1/00, B01D 1/18, F26B 3/00, A61K 9/14

(54) **PREPARING DRIED PARTICLES USING A SUPERCRITICAL MEDIUM**
HERSTELLUNG VON GETROCKNETEN PARTIKELN MIT EINEM SUPERKRITISCHEN MEDIUM
PREPARATION DE PARTICULES SECHEES A L'AIDE D'UN MILIEU SUPERCRITIQUE

(30) Priority: 23.02.2006 NL 1031224
(43) Date of publication of application: 03.12.2008
(73) Proprietor: Friesland Brands B.V., 3818 LE Amersfoort (NL)
(72) Inventor: WESTHOFF, Gerrit Marten, NL-3822 CH Amersfoort (NL); TEN KORTENAAR, Marnix Victor, NL-8091 BH Wezep (NL); POORTINGA, Albert Thijs, NL-7331 AL Apeldoorn (NL)
(74) Representative: Hatzmann, Martin
(86) International application number: PCT/NL2007/050077
(87) International publication number: WO 2007/097626

(56) References cited:
- EP-A2- 0 711 586
- WO-A-02/092213
- WO-A2-02/058674
- DE-A1- 19 904 990
- US-A- 5 639 441
- US-A- 6 063 138
- US-A1- 2003 215 515
- JOVANOVIC NATASA ET AL: "Stabilization of proteins in dry powder formulations using supercritical fluid technology" PHARMACEUTICAL RESEARCH (DORDRECHT), vol. 21, no. 11, November 2004 (2004-11), pages 1955-1969, XP002404648 ISSN: 0724-8741

## Description

The invention relates to preparing particles from aqueous compositions and drying a composition, respectively. The invention further relates to thus prepared particles, and to the use of a supercritical medium.

For preparing particles from aqueous compositions and drying aqueous compositions, respectively, all sorts of techniques are known.

For preparing and drying particles, spray-drying is a conventional technique. With spray-drying, typically, wet emulsions or dispersions are sprayed under pressure in a spray tower and then contacted with hot air at a temperature of 140-300°C. However, spray-drying can cause problems as a result of a high thermal load of the product, which can lead to quality loss, in particular if the product contains a component which is heat-sensitive. Also, problems can occur with the controllability of the product properties such as particle size distribution, form and/or solubility; there is the risk of dust explosions. Further, the high energy consumption is a problem. For conventional spray-drying, the energy consumption is of the order of 3700 kJ per kg water which is removed.

WO 99/17868 describes a method for preparing a powdery product from a liquid. The liquids to be treated are organic liquids or particle-forming material in an organic solvent. Here, a gas is dissolved in the liquid under pressure. The pressure may be chosen within a wide range and may be below the supercritical pressure. Then, the solution is expanded at a temperature below the critical temperature. In the presence of a powdery auxiliary substance, then the particles are formed. Use of the organic solvent makes this method unsuitable for the preparation of foods.

WO 02/092213 relates to a method where an emulsion is dried using a supercritical liquid or a liquefied gas. The emulsion generally contains an organic solvent as the main solvent. Further, water is present. The choice of the organic solvent is critical with regard to obtaining a stable emulsion; it needs to be very soluble in the supercritical liquid or the liquefied gas and needs to be capable of extracting water along to the supercritical liquid or the liquefied gas. For extracting the water, it is important that the water content is sufficiently low. The importance of choosing the right organic solvent is a complicating factor.

Further, in the choice of the organic solvent, care needs to be taken that it causes no unacceptable toxicity risk for the use for which the product is intended. According to WO 02/092213, it is possible to prepare products with a sufficiently low concentration of a majority of the solvents in pharmaceutical, cosmetic or veterinary applications. To foods, however, more stringent requirements may apply.

US-A 2003/215515 relates to conserving a bioactive material, including viruses and bacteria. From the bioactive material, a solution or suspension is prepared in the presence of a polyol. Then, the solution or suspension is mixed with a high-pressure gas or a virtually supercritical liquid. Then, a suspension of drops in the gaseous phase is prepared by reducing the pressure on the mixture. The drops are then dried using a subcritical drying gas.

DE-A 199 04 990 relates to the preparation of solid nanoparticles from a dispersion using a gas brought under pressure. As a solvent for the dispersion, an alcohol is used, which may optionally contain a low content of water. The preparation of edible particles for foods is not described.

It is an object of the invention to provide a new method with which particles can be prepared and a composition can be dried, respectively, in particular a method with which one or more of the problems mentioned herein are solved.

It is further an object to provide a new particulate product, in particular a new particulate product with desired product properties such as a high degree of roundness, a good solubility in water and/or good foam-building properties.

It has now surprisingly been found that an object of the invention is achieved by means of a method as defined in the claims, where, from an aqueous composition; water is separated from a particle-forming component by use of a specific medium.

Therefore, in a first aspect, the invention relates to a method for preparing particles from an aqueous liquid composition which further contains a component to form the particles from, while the composition is contacted with a supercritical medium, so as to form the particles.

In a second aspect, the invention relates to a method for drying an aqueous composition, comprising removing water from the composition by contacting the composition with a supercritical medium.

The aqueous composition is an emulsion, in particular an emulsion of oil and/or fat in an aqueous continuous phase. Herein, "aqueous" is at least understood to mean that more than 50 wt.% to 100 wt.%, in particular at least 75 wt.%, more in particular at least 90 wt.% or at least 95 wt.% of the above-mentioned phase consists of water.

Most preferably, the emulsion contains at least one particle-forming component chosen from the group of carbohydrates and proteins.

A supercritical medium is a substance at a temperature and pressure above the thermodynamically critical point. The critical point determines the conditions (temperature, pressure) at which the liquid phase in effect exists no longer. When a liquid is heated, the density decreases while the pressure and density of the vapor which is formed increase. Upon further heating, the densities of the liquid and vapor approach each other until the critical temperature is reached where the two densities are equal to each other and the liquid-gas (vapor) phase separation disappears. In more general terms, the critical point is the end point of a phase equilibrium curve, which separates two distinctive phases. At this point, the phases are no longer distinctive.

The invention further relates to particles obtainable by means of a method according to the invention. Preferred examples of particles according to the invention are powdery creamers, in particular cold soluble creamers, coffee powder, in particular cappuccino powder.

The particles obtainable according to the invention are particles with a hierarchical structure. In this specification, particles with a hierarchical structure are particles which are composed of different substances, in particular particles with one or more compartments of a first substance therein which are surrounded (encapsulated) by a second substance. In one embodiment, an oil or fat is encapsulated by means of a method according to the invention.

Surprisingly, by means of the method described here, hierarchical particles, in particular encapsulated oil and/or fat particles, can be produced by spraying an emulsion in a supercritical medium. This is particularly surprising because it was reported earlier that contact between emulsions and a supercritical medium resulted in demulsification (see e.g. "A novel process for demulsification of water-in-crude oil emulsions by dense carbon dioxide", Zaki, Nael N.; Carbonell, Ruben G.; Kilpatrick, Peter K. Industrial & Engineering Chemistry Research (2003), 42(25), 6661-6672).
Fig. 1 and Fig. 2 schematically show an installation with which a method according to the invention can be carried out;
Fig. 3A shows a photograph taken with scanning electron microscopy of a cappuccino foamer according to the invention (Example 1);
Fig. 3B shows a photograph taken with scanning electron microscopy of a cold soluble powder according to the invention (Example 2);
Fig. 3C shows a photograph of a cold soluble powder according to the prior art; and
Fig. 4 shows the dissolution behavior of a number of powders prepared according to the invention and a powder according to the prior art.

A method according to the invention is particularly suitable for preparing edible particles. Herein, "edible" is particularly understood to mean "suitable for human consumption", more in particular suitable for use in a food, including beverages, such as for instance in a dairy product, soup or a beverage. Preferred examples of beverages are coffee, ice coffee, chocolate milk, fruit drinks or a cold drink. In a preferred embodiment, the invention relates to the preparation of a creamer, in particular for a soup or beverage, or a foamer, in particular for a beverage, such as cappuccino or another coffee drink provided with a layer of foam.

A method according to the invention is favorable with a view to energy consumption. The water taken up by the supercritical medium can be removed by absorption to desiccants (zeolites) and/or condensing of the water from the supercritical medium. The desorption process of the desiccants can take place at relatively high temperatures. The residual heat released in the desorption process can be utilized again. Further, the drying process can take place in more compact equipment, which reduces heat losses to the environment, compared with conventional drying. The total energy saving may be of the order of 500 kJ/kg.

In addition, the method can be carried out in a smaller installation than a conventional spray-drying process. In particular, a smaller precipitation space (drying tower) is sufficient with equal capacity, i.e. an equally large precipitation space has a higher capacity.

The method according to the invention is very suitable to be carried out at a relatively low temperature, in particular a temperature of maximally 100°C. This makes the invention also excellently suitable for use on a composition containing a heat-sensitive component.

Further, by means of the invention, it is possible to form the particles in the absence of other solvents than water. In particular, the invention can be carried out without utilizing organic or inorganic solvents which are undesired, unsuitable or prohibited for use in products for human or animal consumption.

In a preferred embodiment, the aqueous composition is essentially free of organic and inorganic solvents other than water and edible oils (such as vegetable and animal triglyceride oils).

Herein, an edible oil is understood to mean an edible component which is allowed to be present in a product according to the invention. If present, the function of the edible oil is typically primarily to be a component of the particles being formed or dried.

If desired, one or more other solvents than water may be present, in particular one or more other solvents which are permissible for a food or food ingredient in the concentration used. Typically, the weight ratio of the total content of organic solvent(s) and/or the total content of inorganic solvent(s) other than water up to the content of water in the liquid composition is less than 3:2 each, in particular less than 1:1, more in particular maximally 1:2, preferably maximally 1:4.

The total content of solvents other than water and any edible oil present is maximally 1:2, in particular maximally 1:3, preferably maximally 1:10, most preferably maximally 1:20, maximally 1:99 or maximally 1:1,000.

If the presence of another solvent than water is desired, the ratio is typically at least 1:1,000, at least 1:200 or at least 1:100.

A method according to the invention further offers an advantage with regard to safety. Because a relatively low temperature is sufficient, there is little risk of explosion compared to a conventional spray-drying process. Not needing to use organic solvents also offers advantages in this respect.

By means of the invention, it is possible to adequately control the product properties of the particles and the dried product, respectively. Thus, the particle size distribution can be controlled adequately and, by means of the invention, products can be formed which have good dissolution properties in water. Compared to products prepared in a conventional manner, it has been found that, by means of the invention, a product is obtainable with a more homogeneous particle size distribution.

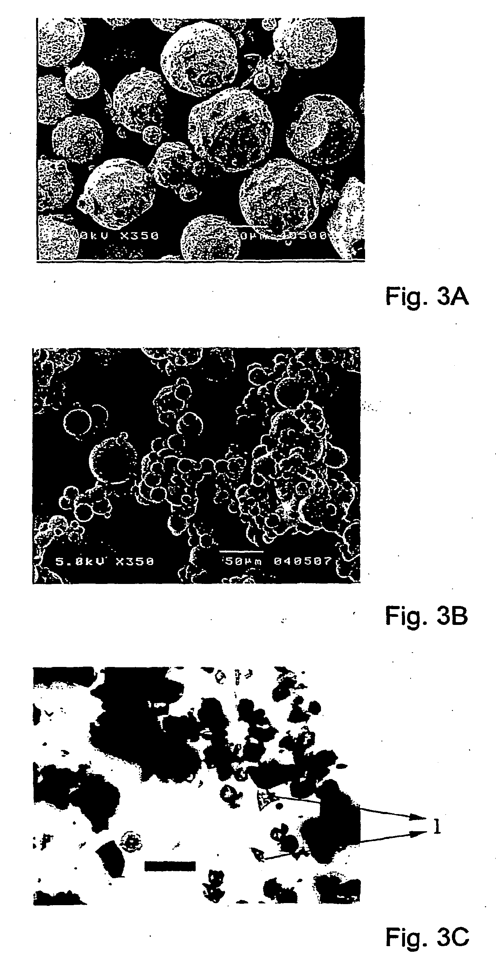

The invention also provides a product with a (more) homogeneous composition. Fig. 3C shows a cold soluble powder according to the prior art. In this, lactose crystals are perceivable (1), which have not been taken up into the particles. By means of the invention, it has been found possible to manufacture powders which are at least substantially free of free crystals of the individual ingredients, in particular at least substantially free of free crystals of solid carrier material present in the powder. In particular, it has been found possible to manufacture saccharine powders, such as lactose-containing powders, which are at least substantially free of free sugar crystals, such as lactose crystals.

Of a particulate product according to the invention, in one embodiment, it has been found that it is characterized by a relatively smooth surface and/or a high degree of roundness (sphericity) (see for instance Fig. 3C in comparison). Without wishing to be bound to any theory, it is suspected that the smoothness and/or high degree of roundness contribute to favorable flow properties.

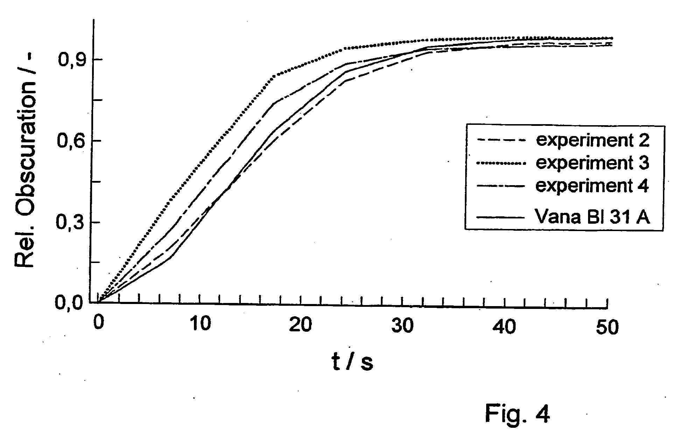

It has further been found that particles obtainable by means of the invention have a good solubility, in particular a better solubility (in particular a higher initial dissolution rate) in a solvent, such as water, than particles with a similar composition, prepared in a conventional spray-drying process (see for instance Fig. 4).

It has further been found that a product obtainable by means of the invention has a slighter tendency to agglomeration and/or sticking than a conventional spray-dried product.

In one embodiment, a product obtainable by means of the invention contains a gas or a mixture of gases, such as nitrogen or air. Due to the manner of drying, it has been found that the gas is confined in the powder particle under pressure. Typically, here, it is found that some gas coming from the supercritical medium, such as CO₂, is also present in the powder particles. The presence of this gas is determinable by means of a method described in Example 1, while a skilled person knows how to use an alternative for the CO₂ sensor, for determining the presence of another gas than CO₂. The content of such a gas, based on the total gas content of the product, may be at least 10 wt.%, at least 20 wt.% or at least 40 wt.%.

Since, using the invention, it is not necessary to use other solvents than water (provided that, if desired, edible oil is present which is intended as a component for the particles), it is also possible, using the invention, to provide particles which are essentially free of organic solvents, or at least free of organic solvents which are not suitable for human consumption, or at least free of organic solvents other than edible oils.

"Essentially free" is in particular understood to mean a content of less than 0.1 wt.%, based on the total weight of the particles, more in particular a content of less than 0.01 wt.%, still more particular a content below the detection limit, attainable with a conventional measurement technique such as GC. Where such contents are impermissible on the basis of legal provisions for a particular type of product, such as legislation in the field of foods, the content is typically below the maximum permissible value for such a product, for instance a food.

The invention is further very suitable to be carried out in low-oxygen, in particular essentially oxygen-free, conditions, this in contrast with conventional spray-drying processes. This suppresses conventional oxidation processes. "Low-oxygen" is in particular understood to mean an oxygen concentration of less than 1 vol.% during the contact between the composition and the supercritical medium; "essentially oxygen-free" is in particular understood to mean an oxygen concentration of less than 0.1 vol.% during the contact between the composition and the supercritical medium.

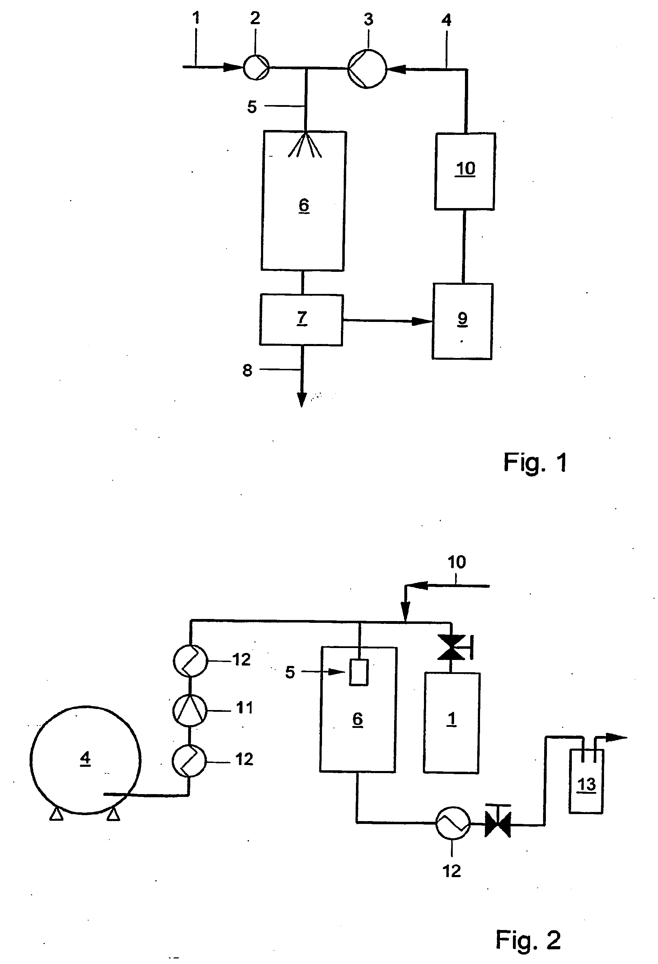

If desired, a method according to the invention may be carried out in a continuous drying installation, for instance in the installation schematically shown in Fig. 1. Therein, the composition, through line 1 using pump 2, and the supercritical medium, through line 4 using pump 3 are fed to nozzle 5. Through nozzle 5, supercritical medium and composition are led into the precipitation/drying space 6, where supercritical conditions prevail. The formed particles/dried composition (typically also particulate) are then, if desired, with supercritical medium, led to separator 7 where the particles are separated from the supercritical medium. The (supercritical) medium may then be led via a cooler 9 (optional) to the dryer 10 (also optional). Then, the (supercritical) medium may be reused as a desiccant or precipitant, if necessary after temperature and/or pressure increase to realize suitable supercritical conditions.

Fig. 2 shows a different installation in which the method can be carried out batchwise. Therein, the composition 1 is mixed with a gas 10, for instance nitrogen or CO₂. Then, composition 1 with the gas 10 and the supercritical medium are led into the drying/precipitation space 6 through the nozzle 5. The supercritical medium is led to condensate tank 13 via cooler 12. After drying of the particles, the gas is drained off there, for instance to the atmosphere, while the particles remain on the bottom of the drying/precipitation space.

Of course, combinations may be made of the parts shown in Fig. 1 and Fig. 2.

As an aqueous composition, a solution of particle-forming components in water or a suspension thereof can be used.

Preferably, the aqueous composition comprises an emulsion. The water content is preferably 10 to 50 wt.% based on the total weight of the composition. The weight ratio of water to particle-forming components may be chosen within the conventional limits, in particular within the range of 20 to 40%.

The composition may be prepared artificially or be a natural product or a fraction thereof, such as milk, colostrum or whey.

In principle, any component forming particles in the supercritical medium may be used. In one embodiment, one or more components are used chosen from the group consisting of bioactive compounds. A method according to the invention is very suitable for preparing particles containing at least one component chosen from the group consisting of lipids (for instance fats), carbohydrates, proteins, peptides, acids, vitamins, flavorings and salts.

The preferred components include oils and fats (such as hardened coconut fat); carbohydrates, such as sugars (such as glucose syrup and lactose), starch; emulsifiers (such as monostearate), salts of phosphates, peptides and proteins (such as caseinate). To the composition, one or more auxiliary substances may be added, such as an auxiliary substance chosen from the group consisting of gases, emulsifiers, solid carrier materials (such as a sugar, starches, proteins and silica).

In particular for preparing foam-building particles, i.e. particles which foam upon dissolving in a suitable solvent (such as water or an aqueous mixture), a gas can be added to the composition. This gas can then be encapsulated during the formation of the particles. Suitable gases are, for instance, nitrogen, carbon dioxide and mixtures thereof. The quantity of gas is typically chosen in a ratio of gas to aqueous composition (without the gas) within the range of 0.01 to 4 w/w% or 0.1-4 w/w%. Such a method is, for instance, very suitable for making a foamer for a beverage, such as coffee.

As a supercritical medium, in principle, any supercritical medium may be used in which the particle-forming component at least substantially does not dissolve. Typically, water does dissolve at least partly in the supercritical medium.

Very suitable as a supercritical medium are carbon dioxide and nitrous oxide, which may be used alone or in combination. It is surprising that such media are suitable for removing water, since they are not very hydrophilic. These media are excellently suitable for the preparation of a food or food ingredient.

Supercritical NH₃ is also suitable, as are - particularly for applications outside food technology - supercritical organic hydrocarbons such as methane, ethane, ethane, propane, propene, n-butane, i-butane and n-pentane; alcohols such as benzyl alcohol, methanol, ethanol, (iso)propanol, (iso)butanol, halogenated compounds such as chlorotrifluoromethane, monofluoromethane; cyclic hydrocarbons such as toluene, pyridine, cyclohexane, cyclohexanol and o-xylene. Supercritical points thereof are known, for instance from EP 744 922 B1.

Herein, "particle" is understood to mean a material which is molecularly dissolved in neither the supercritical medium nor the water. In particular, the "particle" is wholly or partly solid or in gel form. Particles may be massive, hollow or porous.

In the case of hollow particles, the particle may comprise a solid outside surrounding a gas or liquid. Examples of such particles are, for instance, oil particles surrounded by a capsule from a solid material and cappuccino foamers, which particles comprise encapsulated gas, typically with a pressure higher than the atmospheric pressure.

In the case of porous particles, the particle may comprise a solid matrix and pores filled with a gas or a liquid. Examples of such particles are, for instance, porous particles whose pores contain an oil and cappuccino foamers, where the pores are filled with a gas, typically with a pressure higher than the atmospheric pressure. The particle size may be set within wide limits. Preferably, the volume-average particle size, as determined by means of laser diffraction, is within the range of 1 to 200 µm, more preferably within the range of 1 to 40 µm.

Contacting aqueous composition and supercritical medium preferably comprises atomizing the composition. To this end, the spraying of at least the composition in a precipitation chamber, which space has a temperature and pressure above the critical point, is suitable.

Spraying in the precipitation chamber may take place from the bottom, the top, the side or a combination thereof. For obtaining a product in which the particles are agglomerated to a relatively slight extent, spraying from the top has been found very suitable.

Very suitable is a method where the composition is mixed with supercritical medium and is then sprayed in a precipitation space, which space has a temperature and pressure above the critical point.

Good results for spraying the composition in the precipitation space have particularly been achieved with a nozzle with two inlets and one outlet (a T-nozzle), such as a concentric nozzle for two liquids, where one of the inlets serves for the aqueous composition and the other for the supercritical medium.

The temperature of the supercritical medium during the particle-forming contact with the composition may be chosen within a wide range. The temperature is minimally the temperature corresponding to the critical point of the supercritical medium. With a view to an increased drying capacity, the temperature is preferably at least 5°C above the critical point, more preferably at least 15°C above the critical point, most preferably at a temperature of at least 20°C above the critical point.

With a view to the heat load on the particles, the material from which the particle is prepared (in particular if a heat-sensitive component is present) and/or the energy consumption, the temperature is preferably maximally 100°C during the contact between the supercritical medium and the aqueous composition. Good results with regard to preventing or at least reducing thermal degradation reactions have been obtained with a temperature of maximally 80°C, in particular maximally 70°C, more in particular maximally 60°C.

The pressure of the supercritical medium during the particle-forming contact with the composition may be chosen within a wide range. The pressure is minimally the pressure corresponding to the critical point of the supercritical medium. With a view to a favorable drying capacity, the pressure is preferably at least 25 bar above the critical point, more preferably at least 50 bar above the critical point, most preferably at least 75 bar above the critical point.

The pressure is typically 500 bar during the contact between the supercritical medium and the aqueous composition, although higher pressures may be used if desired. Very suitable is a pressure of maximally 200 bar.

The contact time of supercritical medium and the composition in supercritical conditions can be set within wide limits, depending on the type of process and the desired product. Typically, a contact time of 1200 seconds or less is sufficient, in particular for continuous preparation. The contact time is typically at least 1 second. For practical reasons, the contact time in supercritical conditions is typically maximally about 5 minutes, preferably maximally about 1 minute, in particular with continuous preparation.

Of a method where the contact time is about 45 minutes or more, it has been found that the particles have a particularly high integrity.

After formation of the particles, these are typically separated from the supercritical medium. With a view to keeping the particles dry, here, preferably supercritical conditions are maintained for the medium, although it is in principle also possible to have medium transfer to the gas phase. Suitable separation steps comprise filtering and separation using a cyclone.

The supercritical medium (whether or not transferred to the gas phase) can then be reused, after water has been removed therefrom. The removal of water preferably takes place by drying using a zeolite, silica or other solid desiccant. Because these desiccants can be used at a relatively low temperature, application thereof also offers energetic advantages. The invention will now be explained on the basis of the following examples, namely: cappuccino foamer and cold soluble powder.

The invention further relates to a continuous method, comprising preparing particles from a liquid composition which further comprises a component to form the particles from, while the composition is contacted with a supercritical medium in continuous-process conditions under pressure.

The invention further relates to a continuous method for drying aqueous composition, comprising the removal of water from the composition, while the composition is contacted with a supercritical medium in continuous-process conditions under pressure.

In a continuous method where the particle formation and the drying, respectively, take place using a supercritical medium, a method as described hereinabove is particularly suitable.

In a preferred continuous method according to the invention, the particles are mixed with the supercritical medium under pressure, and then the mixture is sprayed, while the pressure may be lowered if desired.

The temperature and pressure of the mixture prior to spraying are at or above supercritical conditions.

The pressure and temperature in the precipitation space in which spraying takes place are preferably supercritical.

As a nozzle, a (conventional) nozzle may be used which is suitable for spraying compositions under the pressure in the supply line to the nozzle.

The invention will now be explained on the basis of the following examples.

### Example 1: Cappuccino foamer:

### Experiment description:

Two cappuccino foamers were produced in an installation as shown in Fig. 2. Nitrogen gas was mixed with the emulsion in line prior to the dosing of the emulsion liquid to the drying vessel. The emulsion and CO₂ were introduced into the drying vessel via a two-fluid nozzle. The process temperature of the drying vessel was 52°C and 60°C, respectively, with the production of the cappuccino foamers.

The pressure in the drying vessel was about 190 bar. The functionality of the powder was evaluated by means of a foaming test, where a quantity of powder was moistened with water and the height of the resulting foam layer was measured.

### Results and conclusions:

In Fig. 3A, a SEM photograph of the thus produced cappuccino foamer is shown. It is visible that the powders formed are spherical and have a certain degree of homogeneity.

**Table 1: Foaming test results of two cappuccino foamers produced by means of the described process.**

| **Experiment** | **Process temperature [°C]** | **Quantity [g]** | **Foam height [mm]** | **CO₂ (%)** |
|---|---|---|---|---|
| 1 | 52 | 2.5 | 8 | 58 |
| 2 | 60 | 2.5 | 11 | 48 |

The CO₂ content was determined by mixing 0.1 gram of foamer with 1 ml of water in a tube with a capacity of 5 ml and determining the CO₂ and the O₂ content in the air in the tube with a CO₂ and O₂ sensor. From this, it can be calculated how much gas in total and how much CO₂ is released from a powder.

### Example 2: Cold soluble powder

### Experiment description:

An emulsion (produced according to the classical agitation and homogenization technique) was sprayed with CO₂ by a nozzle at a process temperature of 60°C in a high-pressure vessel (175 bar). The process is schematically shown in Fig. 2. The emulsion and the CO₂ were injected by means of a concentric two-fluid nozzle. A displacement pump pumped the emulsion into the vessel. The emulsion was at room temperature. The powder was collected on a filter in the vessel. SEM photographs were made of the produced cold soluble powders.

**Table 2: Process conditions used in the production of cold soluble powder**

| Experiment | Temperature CO₂ [°C] | Temperature High-Pressure Vessel [°C} |
|---|---|---|
| 2 | 76 | 85 |
| 3 | 70 | 70 |
| 4 | 60 | 56 |

### Experimental results:

The obtained powder is fairly liquid, that is to say that the emulsion drops are encapsulated well. The obtained cold soluble powder particles are round (Fig. 3B). This is a fundamental difference from the spray-drying technique where the produced powders are characterized by the presence of rough polydisperse and crystalline particles.

The dissolution behavior of the produced cold soluble powders was characterized with the obscuration signal of Malvern laser diffraction measuring equipment. Fig. 4 shows the obscuration signal as a function of time. Fig. 4 shows that cold soluble powder according to the invention has a better dissolution behavior than the Vana Blanca 31 A produced through spray-drying process (Vana Blanca 31 A, available through Kievit, NL). The fact is that Fig. 4 shows a higher dissolution rate in the first seconds for the products according to the invention.

## Claims

1. A method for preparing edible particles, in particular particles for a food, including beverages, or food ingredient, including ingredients for beverages, from an aqueous liquid composition which further contains a component to form the particles from, wherein the composition is an emulsion, wherein in the composition the weight ratio of solvents other than water and edible oils to water is 0:1 to 1:2 and wherein the composition is contacted with a supercritical medium, so as to form particles with a hierarchical structure.

2. A method for drying aqueous edible particles with a hierarchical structure, in particular particles for a food, including beverages, or food ingredient, including ingredients for beverages, the composition being an emulsion, the weight ratio of solvents other than water and edible oils to water in the composition being 0:1 to 1:2, and the method comprising the removal of water from the composition by contacting the composition with a supercritical medium, so as to form dried particles.

3. A method according to claim 1 or 2, wherein the formed particles and the dried composition, respectively, are essentially free of organic solvents which are unsuitable for human consumption.

4. A method according to any one of the preceding claims, wherein the composition is atomized, preferably by mixing the composition with supercritical medium and spraying it in a precipitation space.

5. A method according to any one of the preceding claims, wherein the particle formation takes place at a temperature of minimally the temperature corresponding to the critical point of the supercritical medium and maximally 220°C.

6. A method according to any one of the preceding claims, wherein the particle formation takes place at a pressure of minimally the pressure corresponding to the critical point of the supercritical medium and maximally 500 bar.

7. A method according to any one of the preceding claims, wherein the composition is an emulsion of oil and/or fat in an aqueous continuous phase.

8. A method according to any one of the preceding claims, wherein the composition is mixed with a gas, preferably a gas chosen from the group consisting of nitrogen, oxygen, carbon dioxide and nitrous oxide, or a mixture of gases such as air, and wherein particles are formed containing the gas or mixture of gases.

9. A method according to any one of the preceding claims, wherein the supercritical medium comprises supercritical carbon dioxide and/or supercritical nitrous oxide.

10. A method according to any one of the preceding claims, wherein the composition comprises at least one component for forming particles chosen from the group consisting of foods and food ingredients, in particular from the group of fats, carbohydrates, polypeptides (including proteins), acids, flavorings and salts.

11. A method according to any one of the preceding claims, wherein the particles are a food or an ingredient for a food.

12. A method according to any one of the preceding claims, wherein the particles are separated from the supercritical medium.

13. A method according to claim 12, wherein the separation takes place utilizing a filter and/or a cyclone.

14. A method according to claim 12 or 13, wherein the supercritical medium is reused for contacting it with the composition, after removal of water from the supercritical medium.

15. A method according to any one of the preceding claims, wherein the weight ratio of solvents other than water and edible oils to water is 0:1 to 1:10, in particular 0:1 to 1:99.

16. A method according to any one of the preceding claims, which takes place by means of a continuous process.

17. Method according to any of the preceding claims wherein hollow or porous particles are formed.

18. Particles obtainable by means of any one of the preceding claims.

## Patentansprüche

1. Verfahren zum Zubereiten essbarer Teilchen, insbesondere Teilchen für ein Nahrungsmittel, einschließlich Getränke, oder einer Nahrungsmittelzutat, einschließlich Zutaten für Getränke, von einer wässrigen Flüssigkeitszusammensetzung, die weiterhin eine Komponente enthält, von der die Teilchen gebildet werden, wobei die Zusammensetzung eine Emulsion ist, wobei in der Zusammensetzung das Gewichtsverhältnis von anderen Lösungsmitteln als Wasser und essbaren Ölen zu Wasser 0:1 bis 1:2 ist, und wobei die Zusammensetzung mit einem superkritischen Medium in Kontakt gebracht wird, um Teilchen mit einer hierarchischen Struktur zu bilden.

2. Verfahren zum Trocknen wässriger essbarer Teilchen mit einer hierarchischen Struktur, insbesondere Teilchen für ein Nahrungsmittel, einschließlich Getränke, oder eine Nahrungsmittelzutat, einschließlich Zutaten für Getränke, wobei die Zusammensetzung eine Emulsion ist, wobei das Gewichtsverhältnis von anderen Lösungsmitteln als Wasser und essbaren Ölen zu Wasser in der Zusammensetzung 0:1 bis 1:2 ist, und das Verfahren das Entfernen von Wasser aus der Zusammensetzung umfasst, durch in Kontakt bringen der Zusammensetzung mit einem superkritischen Medium, um getrocknete Teilchen zu bilden

3. Verfahren nach Anspruch 1 oder 2, wobei die gebildeten Teilchen bzw. die getrocknete Zusammensetzung im Wesentlichen frei von organischen Lösungsmitteln sind, die ungeeignet für den menschlichen Verzehr sind.

4. Verfahren nach einem der vorhergehenden Ansprüche, wobei die Zusammensetzung atomisiert wird, vorzugsweise durch Mischen der Zusammensetzung mit superkritischem Medium und Sprühen desselben in einen Niederschlagsbereich.

5. Verfahren nach einem der vorhergehenden Ansprüche, wobei die Teilchenbildung bei einer Temperatur von mindestens der Temperatur, die dem kritischen Punkt des superkritischen Mediums und höchstens 220°C entspricht, erfolgt.

6. Verfahren nach einem der vorhergehenden Ansprüche, wobei die Teilchenbildung bei einem Druck von mindestens dem Druck, der dem kritischen Punkt des superkritischen Mediums und höchstens 500 Bar entspricht, erfolgt.

7. Verfahren nach einem der vorhergehenden Ansprüche, wobei die Zusammensetzung eine Emulsion von Öl und/oder Fett in einer wässrigen kontinuierlichen Phase ist.

8. Verfahren nach einem der vorhergehenden Ansprüche, wobei die Zusammensetzung mit einem Gas gemischt wird, vorzugsweise einem Gas, ausgewählt aus der Gruppe bestehend aus Stickstoff, Sauerstoff, Kohlendioxid und Stickstoffoxid oder einem Gemisch von Gasen wie Luft, und wobei Teilchen gebildet werden, die das Gas oder das Gemisch von Gasen enthalten

9. Verfahren nach einem der vorhergehenden Ansprüche, wobei das superkritische Medium superkritisches Kohlendioxid und/oder superkritisches Stickstoffoxid umfasst.

10. Verfahren nach einem der vorhergehenden Ansprüche, wobei die Zusammensetzung mindestens eine Komponente zur Bildung von Teilchen umfasst, , ausgewählt aus der Gruppe bestehend aus Nahrungsmitteln und Nahrungsmittelzutaten, insbesondere aus der Gruppe von Fetten, Kohlehydraten, Polypeptiden (einschließlich Proteinen), Säuren, Aromastoffen und Salzen.

11. Verfahren nach einem der vorhergehenden Ansprüche, wobei die Teilchen ein Nahrungsmittel oder eine Zutat für ein Nahrungsmittel sind.

12. Verfahren nach einem der vorhergehenden Ansprüche, wobei die Teilchen von dem superkritischen Medium getrennt werden.

13. Verfahren nach Anspruch 12, wobei die Trennung unter Verwendung eines Filters und/oder einer Wirbelkammer stattfindet.

14. Verfahren nach Anspruch 12 oder 13, wobei das superkritische Medium wiederverwendet wird, um es nach dem Entfernen von Wasser aus dem superkritischen Medium mit der Zusammensetzung in Kontakt zu bringen.

15. Verfahren nach einem der vorhergehenden Ansprüche, wobei das Gewichtsverhältnis von anderen Lösungsmitteln als Wasser und essbaren Ölen zu Wasser 0:1 bis 1:10, insbesondere 0:1 bis 1:99 ist.

16. Verfahren nach einem der vorhergehenden Ansprüche, das mittels eines kontinuierlichen Prozesses stattfindet.

17. Verfahren nach einem der vorhergehenden Ansprüche, wobei hohle oder poröse Teilchen gebildet werden.

18. Teichen, erhaltbar durch Mittel irgendeines der vorhergehenden Ansprüche.

## Revendications

1. Procédé de préparation de particules comestibles, en particulier des particules pour un aliment, y compris une boisson, ou un ingrédient alimentaire, y compris un ingrédient pour boisson, à partir d'une composition liquide aqueuse qui contient en outre un composant destiné à la formation de particules à partir de celle-ci, dans lequel la composition est une émulsion, dans lequel, dans la composition, le rapport en poids des solvants autres que l'eau et les huiles comestibles à l'eau est de 0/1 à 1/2, et dans lequel la composition est mise en contact avec un milieu supercritique, de façon à former des particules avec une structure hiérarchique.

2. Procédé de séchage de particules comestibles aqueuses avec une structure hiérarchique, en particulier des particules pour un aliment, y compris une boisson, ou un ingrédient alimentaire, y compris un ingrédient pour boisson, la composition étant une émulsion, le rapport en poids des solvants autres que l'eau et les huiles comestibles à l'eau dans la composition étant de 0/1 à 1/2, lequel procédé comprend l'élimination de l'eau de la composition par mise en contact de la composition avec un milieu supercritique, de façon à former des particules séchées.

3. Procédé selon la revendication 1 ou 2, dans lequel les particules formées et la composition séchée, respectivement, sont pratiquement exemptes de solvants organiques qui ne sont pas adaptés à la consommation humaine.

4. Procédé selon l'une quelconque des revendications précédentes, dans lequel la composition est atomisée, de préférence par mélange de la composition avec un milieu supercritique et pulvérisation de celle-ci dans un espace de précipitation.

5. Procédé selon l'une quelconque des revendications précédentes, dans lequel la formation de particules a lieu à une température qui est au minimum la température correspondant au point critique du milieu supercritique et au maximum de 220°C.

6. Procédé selon l'une quelconque des revendications précédentes, dans lequel la formation de particules a lieu sous une pression qui est au minimum la pression correspondant au point critique du milieu supercritique et au maximum de 500 bar.

7. Procédé selon l'une quelconque des revendications précédentes, dans lequel la composition est une émulsion d'huile et/ou de graisse dans une phase continue aqueuse.

8. Procédé selon l'une quelconque des revendications précédentes, dans lequel la composition est mélangée avec un gaz, de préférence un gaz choisi dans le groupe constitué par l'azote, l'oxygène, le dioxyde de carbone et l'oxyde nitreux, ou un mélange de gaz tel que l'air, et dans lequel sont formées des particules contenant le gaz ou le mélange de gaz.

9. Procédé selon l'une quelconque des revendications précédentes, dans lequel le milieu supercritique comprend du dioxyde de carbone supercritique et/ou de l'oxyde nitreux supercritique.

10. Procédé selon l'une quelconque des revendications précédentes, dans lequel la composition comprend au moins un composant pour former des particules choisi dans le groupe constitué par les aliments et les ingrédients alimentaires, en particulier dans le groupe des graisses, des hydrates de carbone, des polypeptides (y compris les protéines), des acides, des arômes et des sels.

11. Procédé selon l'une quelconque des revendications précédentes, dans lequel les particules sont un aliment ou un ingrédient pour un aliment.

12. Procédé selon l'une quelconque des revendications précédentes, dans lequel les particules sont séparées du milieu supercritique.

13. Procédé selon la revendication 12, dans lequel la séparation a lieu au moyen d'un filtre et/ou d'un cyclone.

14. Procédé selon la revendication 12 ou 13, dans lequel le milieu supercritique est réutilisé pour être mis en contact avec la composition, après élimination de l'eau du milieu supercritique.

15. Procédé selon l'une quelconque des revendications précédentes, dans lequel le rapport en poids des solvants autres que l'eau et les huiles comestibles à l'eau est de 0/1 à 1/10, en particulier de 0/1 à 1/99.

16. Procédé selon l'une quelconque des revendications précédentes, qui a lieu au moyen d'un traitement en continu.

17. Procédé selon l'une quelconque des revendications précédentes, dans lequel des particules creuses ou poreuses sont formées.

18. Particules pouvant être obtenues au moyen de l'une quelconque des revendications précédentes.
